Europäisches Patentamt

European Patent Office

Office européen des brevets

(11) Publication number: **0 286 606**
**A2**

## EUROPEAN PATENT APPLICATION

(21) Application number: **88830138.9**

(22) Date of filing: **30.03.88**

(51) Int. Cl.⁴: **G 08 C 19/30**

(30) Priority: **07.04.87 IT 8361687**

(43) Date of publication of application:
**12.10.88 Bulletin 88/41**

(84) Designated Contracting States: **DE FR GB IT**

(71) Applicant: **TECNOPLANT S.R.L.**
**Piazza Cavour, 7**
**I-20121 Milano (IT)**

(72) Inventor: **Martorella, Euro**
**Via Eustachi 9**
**I-20129 Milano (IT)**

(74) Representative: **Pellegri, Alberto et al**
**c/o Società Italiana Brevetti S.p.A. Via Cavour, 9**
**I-21100 Varese (IT)**

(54) **Self-powered automatic control module for a remote electric load.**

(57) An automatic control of a remotely located electric load in function of variable physical parameters such as temperature, pressure, humidity, luminance, etc. realized by means of transducers and electronic control circuits andactuating means to be placed in locations without electric outlets, may require a three-wires connecting line or the use of primary or storage batteries to power the control module. The control device of the present invention permits to electrically supply the electronic control circuit and actuating means and eventually also the relative transducers, by maintaining a bifilar connecting line between the control device and the remotely located load. The device utilizes a two-positions switch actuating means for switching the load through a high impedance winding when switching-off the load and through a low impedance winding when switching-on the load, which windings are part of a transformer having a secondary winding for electrically supplying the control circuit driving said two-positions switch.

FIG. 4

EP 0 286 606 A2

Bundesdruckerei Berlin

## Description

## SELF-POWERED AUTOMATIC CONTROL MODULE FOR A REMOTE ELECTRIC LOAD

The remote control of an electric load is a very common practice in modern plans. Such a practice is a solution to the necessity of controlling the start and stop, the turning-on and off of various types of appliances from a remote location, either through a manual control or through an automatic control in function of a local physical variable such as for example temperature, pressure, humidity, luminance, etc.. The automation of such a control is normally effected by means of suitable transducers and related electronic control circuits and actuators, such as for example relays or similar devices. Such remote control modules or devices, in the majority of cases, need an electrical supply means for their operation. When the remote control module must be placed in a location without electrical outlets, the problem of electrically powering the electronic control circuits is obviated either by the use of primary batteries or storage batteries, as energy sources, or by means of a three-wire connection line to the load (i.e. to the remote area where the appliance to be controlled is located).

Either one of such state-of-the-art expedients has, especially in certain situations, limitations and/or drawbacks. The use of primary batteries or rechargeable batteries is seldom practicable in applications wherein the current dissipation by the control circuit and/or by the transducer is rather high. On the other hand, recourse to a three-wire connection between the two remote locations may be expensive when for instance there exists a bifilar connection between the two locations already utilized by an existing manual or mechanical type control, such as for example a bimetal thermostat, which must be substituted by a more perfectioned electronic type control device, i.e. a so-called "cromothermostat" for controlling the opening and closing of zonal valves of a centralized space heating plant.

The control module object of the present invention so as defined in the annexed claims, provides an original and efficient solution to the above noted problem.

The invention and its related advantages in respect of the prior art techniques will be more readily understood by the skilled technician through the following detailed description of several embodiments of the invention and with reference to the annexed drawings, wherein:

Figure 1 is a principle diagram of a remote control of an electric load;

Figure 2 is a circuit diagram of a typical automatic remote control of an electric load according to a known technique;

Figure 3 is a diagram of an alternative circuit for the automatic remote control of an electric load according to another known technique;

Figure 4 is an electric diagram of a self-powered automatic remote control of the invention according to a first embodiment thereof;

Figure 5 is an electric diagram of a self-powered automatic remote control of the invention according to a second embodiment thereof; and

Figure 6 is an electric diagram of a self-powered automatic remote control of the invention according to a third embodiment thereof.

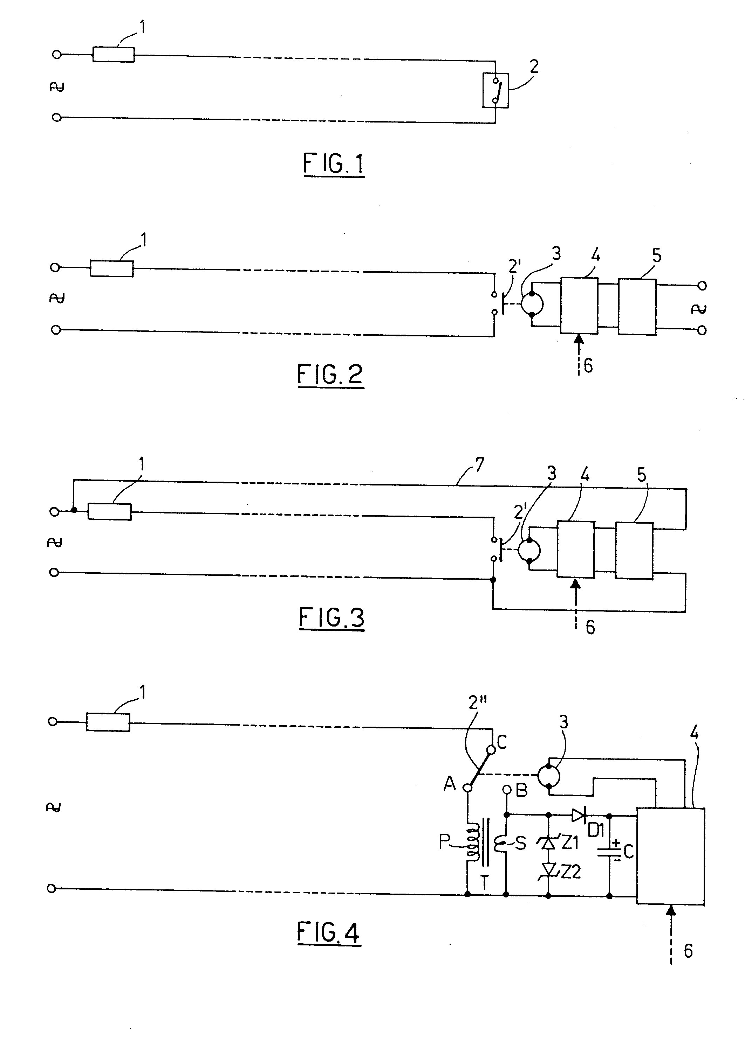

Figures 1, 2 and 3 are representative of as many typical electric circuit diagrams of the prior art for remotely controlling a certain electric load 1, often represented by an electromagnetic actuator. In the case shown in Fig. 1, the electric load 1, which may be represented by a zonal area solenoid valve for controlling the space heating of certain rooms, is remotely controlled by a switch 2, which may be conveniently located in the room wherein a certain constant temperature must be desirably maintained and which is normally relatively far away from the location of the load 1. The switch 2 may be a manual switch or a bimetal switch (i.e. a mechanically operated thermostat or similar device). The electrical "connection" between the two remote locations is represented by a bifilar line, which may be several hundreds meters long.

In Fig. 2 is diagrammatically shown a type of remote control of a certain load 1, by means of which the remote electric load 1 may be desirably controlled automatically by means of a control device comprising essentially an electronic control circuit 4, an actuating means, e.g. a relay 3 operating the contacts 2' which may be driven by an output signal of the electronic control circuit 4. An input signal to the electronic control circuit 4 may be provided by a suitable transducer (not shown) sensitive to any physical parameter and is schematically indicated by the arrow 6. The electrical supply of the electronic control circuit 4, of the transducer itself and/or of the winding of the output relay 3 may be provided by means of a power supply 5 which may be connected to an electrical outlet of the electric distribution network or by means of an equivalent primary or storage battery. Also in this case the connection between the two remote locations may be constituted by a bifilar line similar to the case illustrated in Fig. 1.

Where isn't available an electrical outlet nearby the location where the remote control module must be placed and where isn't possible or desirable to use primary or storage batteries for powering the automatic remote control module, the known technique contemplates a three-wires connection as shown in the circuit diagram of Fig. 3. In many situations, and particularly when retrofitting existing systems using a manual or mechanical type control as schematically indicated by a simple switch 2 in Fig. 1, with an electronic type automatic control device, it is necessary to replace the existing bifilar line connection between the two remote locations with a three-wires line, which may determine a conspicuous increase of the retrofitting cost, especially when new duct work is required.

A first embodiment of the self-powered automatic remote control device object of the present invention is shown in the diagram of Fig. 4.

Essentially the switch 2 or 2′ of the control devices of the prior art is functionally substituted by a two positions switch 2″ in the device of the invention. A terminal of the electric load 1 is directly connected to a first pole of an electric distribution outlet available nearby and the other terminal of the load is connected, through a first wire of the bifilar line connection, to the common pole C of the two position switch 2″. A second pole of the electrical distribution outlet is connected, through the other wire of the bifilar line, to a high impedance primary winding P and to a low impedance secondary winding S, connected in common, of a transformer T. The other terminal of the primary P and of the secondary S are connected respectively to the poles A and B of the two position switch 2″. Therefore when the load 1 is turned-off is in electrical series with the primary winding P of the transformer T as shown in Fig. 4 and the impedance of the primary of the transformer is such as to determine the flow of an electrical current of about 2-3 mA (i.e. of a substantially negligeable value) through the load 1. The impedance of the primary P of the transformer T is normally made greater than at least 30.000 ohms and more preferably is comprised between 40.000 and 100.000 ohms. The current flowing through the primary P, even though negligeable for the load 1, is still sufficient to produce on the secondary winding S of the transformer T an alternate voltage sufficient to supply the electronic control circuit 4 after having been rectified by the diode D1. A ripple smoothing capacitor C may be connected between the cathode of the diode D1 and a common potential supply node of the electronic circuit 4, which common potential node coincides with the terminals connected in common of the primary P and secondary S windings of the transformer T. A pair of protection Zener diodes Z1 and Z2 may be connected in parallel to the secondary winding S of the transformer T for preventing the transfer to the electronic circuit of voltage peaks which could damage the semiconductor devices forming the electronic control circuit 4.

Also in the device of the invention shown in Fig. 4, the actuating means may be represented by a relay 3 which operates the contacts of the two position switch 2″ in function of an input signal 6 provided by a transducer capable of detecting the magnitude of a physical parameter such as for example temperature, pressure, humidity, luminance, etc..

When the electronic control circuit 4 drives the actuating relay 3 for switching-on the load 1, the switch 2″ is driven in the C-B position and the load 1 is connected in series with the secondary windings S of the transformer T and, because of the low impedance of this secondary winding of the transformer, the load is effectively switched-on while across the terminals of the secondary windings S of the transformer continues to be present an alternate voltage sufficient to power the electronic control circuit 4. The transformer T may for example be an 1W - 220/10 V transformer. With such a transformer the current through the load 1 and the transformer's primary winding when the load is switched-off (switch 2″ in C-A position) is lower or equal to about 2-3 mA, while at the terminals of the secondary winding about 40-60 mA at 10 V are available. When the load is switched-on (switch 2″ in C-B position), the transformer T saturates and doesn't modify the electrical conditions of the circuit besides a voltage drop of about 10 V across the terminals of the secondary winding S which will be suitably sized in function of the current drawn by the load 1 at steady ON conditions. The voltage drop of 10 V fits standard tolerances commonly contemplated by manufacturers of electrical appliances. A capacitor (not shown) may be connected in parallel to the load 1 to prevent limit related problems in case of a particularly heavy load.

The voltage at the terminals of the secondary winding of the transformer may, more in general, be comprised between 5 and 13 Volts, compatibly with the type of semi-conductor devices utilized by the control circuit.

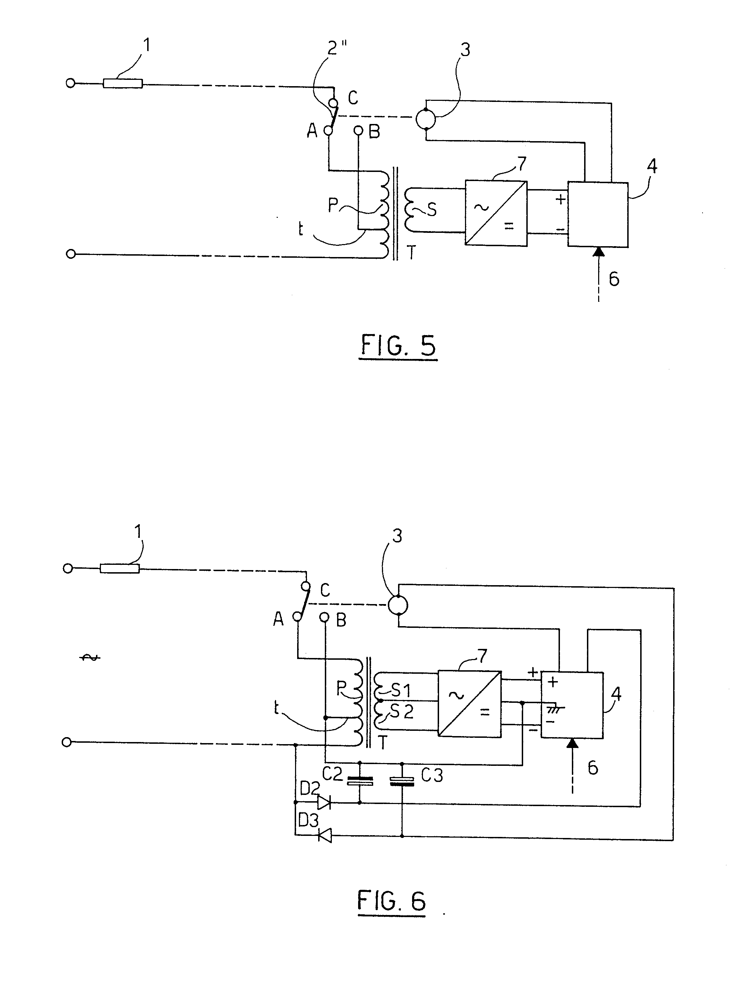

Another embodiment of the self-powered automatic remote control device of the invention is shown in Fig 5.

Differently from the embodiment depicted in Fig. 4, the low impedance winding whose terminal is connected to the B pole of the two positions switch 2″ and through which flows the ON current of the controlled remote load 1, is represented by a portion of the primary winding P of the transformer T, namely from the terminal thereof connected to a pole of the power outlet by means of said second wire of the bifilar line to an intermediate tap t of the primary winding P of the transformer. Similar, instead, to the embodiment depicted in Fig. 4, is the way of electrically supplying the electronic control circuit 4 and the actuating means 3 (relay) through the secondary winding S of the transformer which is capable of providing an adequate supply voltage both when the load is switched-off (switch 2″ in C-A position) and a relatively small electric current flows through the whole primary winding P of transformer T, and when the load 1 is switched-on (switch 2″ in C-B) and the steady condition electric current of the load flows through the low impedance winding (the portion of the primary winding P from the terminal thereof connected to the pole of the power distribution network to the intermediate tap t) which will be a winding with a relatively small number of turns.

For semplicity's sake, the rectifier, the low-pass filter and possibly the overvoltage protection means (shown in the diagram of Fig. 4 by the diode D1, the capacitor C and the Zener diodes Z1 and Z2, respectively) are complessively indicated by the block 7.

A further embodiment of the device of the invention is shown in Fig 6.

In this case also the electrical supply of the remotely controlled load 1 takes place through a low impedance winding of the transformer constituted by a portion of the primary winding P of the transformer T in a way similar to the one described in relation to the embodiment shown in Fig. 5.

However, differently from the latter, also the driving current of the actuating means 3 (the relay's winding) is derived by such a low impedance winding constituted by the portion of the primary winding P of the transformer T, namely from the terminal of the latter connected to one pole of the power supply outlet to the intermediate tap t of the primary winding, by providing rectification the voltage across this low impedance winding by means of the diodes D2 and D3 and to smooth the ripple by the filter capacitors C2 and C3, a terminal of which is connected to a common ground node of the electronic control circuit 4. As shown in Fig. 6, the transformer T may be provided with a split secondary winding having a central tap and two perfectly simmetric portions in respect to the primary winding and to the magnetic core of the transformer in order to form a dual power supply having a positive output terminal and a negative output terminal at a simmetric voltage in respect to a common ground node. This may be necessary when the electronic control circuit 4 utilizes devices requiring this type of power supply.

In this embodiment the electronic control circuit 4 performs its driving action through a power switching means connected in the supply circuit of the winding of the actuating relay 3 which is autonomously powered in respect to the electronic control circuit 4.

According to this last embodiment of the device of the invention, the secondary winding (S1 and S2) of the transformer T has the function of supplying the energy necessary solely to the electronic control circuit 4.

The embodiments described in relation to Figures 5 and 6 are decisively preferable in respect to the embodiment shown in Fig. 4 especially in case of reactive loads, such as for example the winding of an actuating solenoid of a valve. In this case in fact the circuit of Fig. 4 may generate problems due to the effects of current and/or voltage peaks at the switching-on and switching-off of the load 1 upon the electronic control circuit which may cause the failure of electronic components thereof particularly susceptible to breakdown.

These inconveniences are substantially absent in the devices made in accordance with the embodiments of Fig. 5 and of Fig. 6, which therefore are better adaptable to particularly heavy load situations.

The self-powered automatic remote control device object of the invention doesn't require a three-wires connecting line between the load and the control module though being electrically supplied without the use of powering batteries. This makes the device of the invention easily retrofitted in ambients already provided with a bifilar connecting line, in substitution of existing thermostats or manual switches.

The device of the invention is particularly useful for so-called "cronothermostats" for regulating the ambient temperature through the opening and closing of a remotely located zonal solenoid valve. The electronic control circuit of these appliances usually incorporates a timing clock, a room temperature sensor and may be provided with means for selecting a timing program from a number of programs memorized on a suitable support as well as with means for selecting a desired temperature. The **various** programs may be stored in a permanent type memory, e.g. a ROM type memory, so that no auxiliary (battery) supply means are needed for retaining the stored data in case of black out. Alternatively a small battery may be contemplated only for ensuring retention of programed data when non-permanent type memories (RAM) are utilized.

## Claims

1. A self-powered control device for an electrical remotely located load operating at a power distribution network voltage, said control device comprising at least an electronic control circuit, an actuating means, and a bifilar connecting line between said remotely located electric load and said control device,
characterized by the fact that
a terminal of said electric load is connected directly to a first pole of an electric outlet and the other terminal of said load is connected, through a first wire of said bifilar line, to a common terminal of a two-positions switch of said actuating means;
said two positions switch switching said load, respectively through a high impedance winding and a low impedance winding, to a second pole of the power outlet which is connected to a common terminal of said high impedance and low impedance windings through the other wire of said bifilar connecting line;
said high impedance and low impedance windings being windings of an electrical transformer which electrically supplies said control circuit and said actuating means;
said actuating means driving said switch for swtiching the load through said high impedance winding when switching-off the load and through said low impedance winding when switching-on the load.

2. A device according to claim 1, wherein said high impedance winding is a primary winding of said transformer, said low impedance winding is a secondary winding of said transformer and said control circuit and said actuating means are electrically supplied by a rectified voltage of said secondary winding.

3. A device according to claim 1, wherein said high impedance winding is a primary winding of the transformer, said low impedance winding is a portion of said primary winding, from said common terminal to an intermediate tap of said primary winding,
said transformer being provided with a secondary winding, the rectified voltage of which supplies said control circuit and said actuating means.

4. A device according to claim 1, wherein said high impedance winding is a primary winding of the transformer, said low impedance winding is a portion of said primary winding, from said common terminal to an intermediate tap of the primary winding, said transformer being provided with a secondary winding, the rectified voltage of which supplies said control circuit;

said actuating means being electrically supplied by a rectified voltage of said low impedance winding.

5. A device according to anyone of the preceding claims, wherein said high impedance winding has an impedance grater than at least 30.000 ohms and the voltage at the terminals of the secondary of the transformer is comprised between 5 and 13 Volts.

6. A device according to anyone of the preceding claims, wherein the control device is a cronothermostat for regulating the room temperature by means of the opening and closing of a remotely located solenoid valve, said electronic control circuit incorporating a timing clock, a room temperature sensor, a selector means for selecting a program among a number of timing programs stored in a memory, and means for selecting a desired temperature and controlling, through said actuating means, the opening and the closing of said remotely located solenoid valve.

0286606

FIG.1

FIG.2

FIG.3

FIG.4

FIG. 5

FIG. 6